(19) Europäisches Patentamt
European Patent Office
Office européen des brevets

(11) **EP 2 251 967 A2**

(12) **EUROPEAN PATENT APPLICATION**

(43) Date of publication:
**17.11.2010 Bulletin 2010/46**

(51) Int Cl.:
**H02M 3/337** $^{(2006.01)}$

(21) Application number: **10161744.7**

(22) Date of filing: **03.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **11.05.2009 US 176978 P**
**04.01.2010 US 651875**

(71) Applicant: **Intersil Americas Inc.**
**Milpitas, CA 95035 (US)**

(72) Inventor: **Moussaoui, Zaki**
**San Carlos, CA 940701 (US)**

(74) Representative: **Fleuchaus, Michael A.**
**Fleuchaus & Gallo Partnerschaft**
**Patent- und Rechtsanwälte**
**Sollner Straße 36**
**81479 München (DE)**

(54) **Control mode for ZVS converter at resonant operating frequencies**

(57) A zero volt switching voltage converter comprises a switching network including a plurality of switches for generating control signals responsive to an input voltage source and switching control signals. Circuitry generates a regulated output voltage responsive to the control current. Control circuitry generates the switching control signals wherein the switching control signals operate the plurality of switches at a resonant frequency of the zero volt switching voltage converter.

FIG. 1

## Description

### CROSS-REFERENCE TO RELATED APPLICATIONS

This application claims benefit of U.S. Provisional Patent Application No. 61/176,978, entitled RESONANT CONVERTER INCLUDING HYSTERETIC/SLIDING MODE CONTROL, filed on May 11, 2009 which is incorporated herein by reference.

### TECHNICAL FIELD

The present invention relates to zero volt switching converters, and more particularly, to the operation of zero volt switching voltage converter at its resonant frequency.

### BACKGROUND

A ZVS (zero-volt-switch) DC/DC converter is a DC/DC voltage converter. When a ZVS converter is operating at zero volts or at a zero level current switching, the common method for controlling the switching frequency of the switching transistors associated with the ZVS converter is to use a variable switching frequency. This control method creates a less than efficient manner of operating the resident topologies because the circuit is not always operating at its resonant frequency. A ZVS converter having the ability to operate at its resonant frequency will have a much higher level of efficiency since the resonant frequency provides the most efficient operating frequency for a ZVS converter. The ability to operate at a resonant frequency for a ZVS converter will also provide the ability to design for a high frequency transformer within the ZVS converter while still having MOSFET switching transistors operating at a lower average frequency. In some implementations, this would enable the transformer of the ZVS converter to have a much smaller configuration.

### SUMMARY

The present invention, as disclosed and described herein, in one aspect thereof, comprises a zero volt switching converter. The zero volt switching converter includes a switching network including a plurality of switches for generating a control current responsive to an input voltage source and switching control signals. Circuitry generates a regulated output voltage responsive to the control current. Control circuitry generates the switching control signals wherein the switching control signals operate the plurality of switches at a resonant frequency of the zero volt switching voltage regulator.

### BRIEF DESCRIPTION OF THE DRAWINGS

For a more complete understanding, reference is now made to the following description taken in conjunction with the accompanying Drawings in which:

Fig. 1 is a schematic diagram of a ZVS DC/DC converter;

Figs. 2a and 2b illustrate the current across the MOSFET switches of the ZVS converter at different switching frequencies;

Fig. 3 is a flow diagram describing the operation of the circuit of Fig. 1 according to the control mode operating the switching transistors at a resonant frequency;

Fig. 4 illustrates the operation of a control method based on a fixed on time equal to half the resonant frequency and discreet off time which is a multiple of half the resonant frequency;

Fig. 5 illustrates a control method based upon hysteretic control and ZVS mode detect to keep the ZVS converter operating at the resonant frequency; and

Fig. 6 is a block diagram of the circuit for controlling the PWM signal to maintain a constant regulated output voltage.

### DETAILED DESCRIPTION

Referring now to the drawings, wherein like reference numbers are used herein to designate like elements throughout, the various views and embodiments of a control mode for ZVS converter at resonant operating frequencies are illustrated and described, and other possible embodiments are described. The figures are not necessarily drawn to scale, and in some instances the drawings have been exaggerated and/or simplified in places for illustrative purposes only. One of ordinary skill in the art will appreciate the many possible applications and variations based on the following examples of possible embodiments.

A ZVS (zero-volt-switch) DC/DC converter is a DC/DC voltage converter. When a ZVS converter is operating at zero volts or at a zero level current switching, the common method for controlling the switching frequency of the switching transistors associated with the ZVS converter is to use a variable switching frequency. This control method creates a less than efficient way of operating the resonant topologies because the circuit is not operating at its resonant operating frequency. A ZVS converter having the ability to always operate at its resonant frequency will have a much higher level of efficiency since the resonant frequency comprises the most efficient operating frequency for a ZVS converter. This design would also provide the ability to design for a high frequency transformer within the ZVS converter while still having the MOSFET switching transistors operating at a lower average frequency. In some limitations this would enable the transformer of the ZVS converter to have a much smaller configuration.

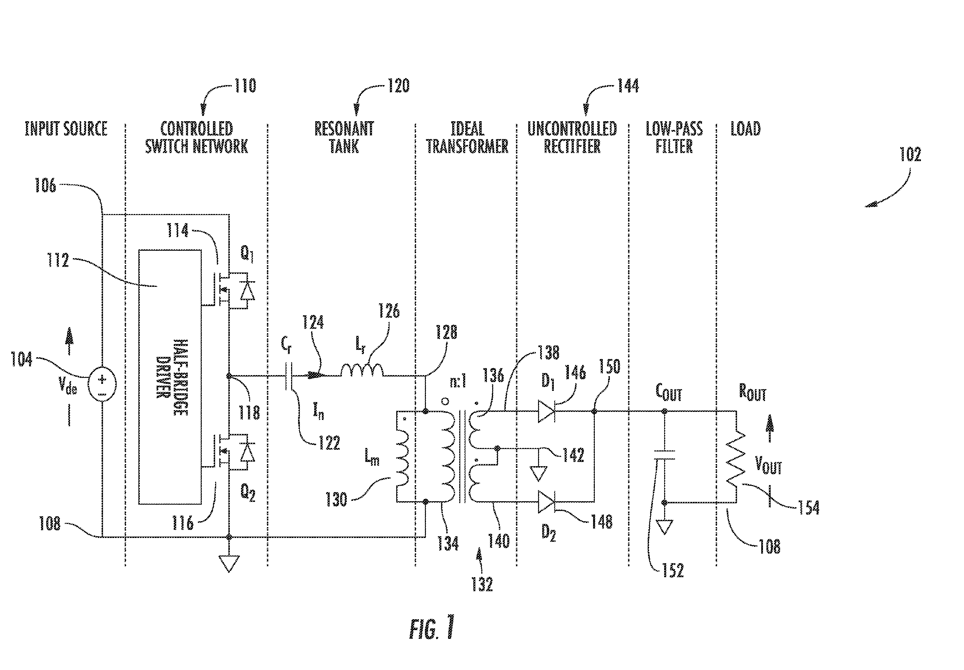

Referring now to the drawings, and more particularly to Fig. 1, there is illustrated a schematic diagram of a ZVS (zero-volt-switch) converter 102. A direct current voltage source 104 is connected between node 106 and the ground node 108. The voltage source 104 provides a DC input voltage to ZVS converter 102. The input voltage source 104 provides the input voltage to a controlled switch network 110 consisting of a half bridge driver control circuit 112, an upper switching transistor 114 and a lower switching transistor 116. The upper switching transistor 114 and lower switching transistor 116 comprise MOSFET transistors which each have their gates connected to receive control signals from the half bridge driver 112. The upper switching transistor 114 is a P or N-channel transistor having its drain/source path connected between node 106 and node 118. The lower switching transistor 116 comprises a P-or N-channel transistor having its drain/source path connected between node 118 and the ground node 108. The output of the controlled switching network 110 is provided from node 118 to a resonant tank circuit 120. The resonant tank circuit 120 consists of a capacitor 122 connected between node 118 and node 124 and an inductor 126 connected between node 124 and node 128. The resonant tank circuit 120 further includes a second inductor 130 that is connected between node 128 and the ground node 108.

An ideal transformer 132 is connected to the resonant tank circuit 120 at node 128 and node 108. A primary side 134 of the transformer 132 is connected in parallel with the inductor 130 between nodes 128 and node 108. The secondary side 136 of the transformer 132 comprises a center tapped transformer and is connected between node 138 and node 140. The secondary side 136 of the transformer 132 also includes a center tap at node 142 that is connected to ground. An uncontrolled rectifier 144 is connected to the secondary side of the transformer at node 138 and node 140. The uncontrolled rectifier 144 consists of a first diode 146 and a second diode 148. Diode 146 has its anode connected to node 138 and its cathode connected to node 160. In an alternative embodiment the diode 146 could be replaced by a MOSFET. The second diode 148 has its anode connected to node 140 and its cathode connected to node 150. The second diode can also be replaced by a synchronous rectifier MOSFET transistor, similarly to the first diode 146. The output of the uncontrolled rectifier 144 provided from node 150 is connected with a low pass filter consisting of a capacitor 152. Capacitor 152 is connected between node 150 and a ground node 108. The load 154 is connected between node 150 and the ground node 108 in parallel with the low pass filter. The output voltage $V_{OUT}$ is provided from node 150.

When the resonant tank 120 is designed, there is always a deviation from the true resonant frequency that is expected for the ZVS circuit. In order to always switch the switching transistors at the resonant frequency, a ZVS detection circuit will monitor the voltage across the switches 114 and 116 and turn on the switches in order to achieve ZVS at the resonant frequency.

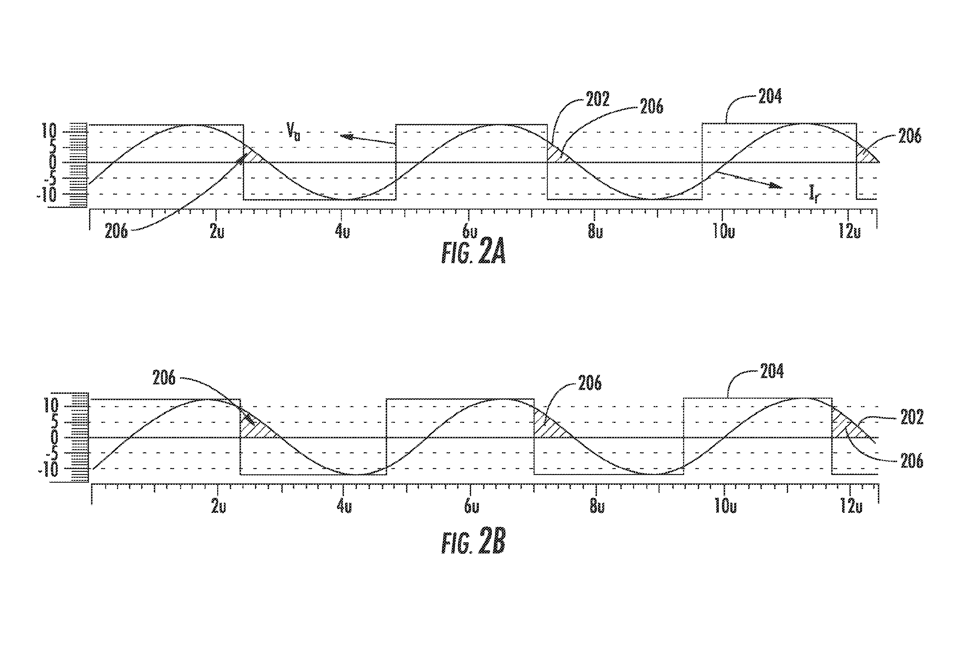

Referring now to Figs. 2a and 2b, there are illustrated the circulating currents 202 with respect to a first switching frequency for the switching transistors that is closer to the resonant frequency than the switching frequency illustrated in Fig. 2b. The square waveform 204 illustrated in each of Figs. 2a and 2b represents the voltage on node 118 of Figure 1. The movement of the switching frequency for the switches further from the resonant frequency causes a circulating energy, represented by the shaded areas 206, to increase as the switching frequency of the switches moves further from the resonant frequency. The increase in the circulating current through the switching transistors causes more power losses and increases electromagnetic interference within the system. These problems are limited by the half bridge driver circuitry 112 providing drive signals to switching transistors 114 and 116, respectively, which are close to the resonant frequency of the ZVS converter.

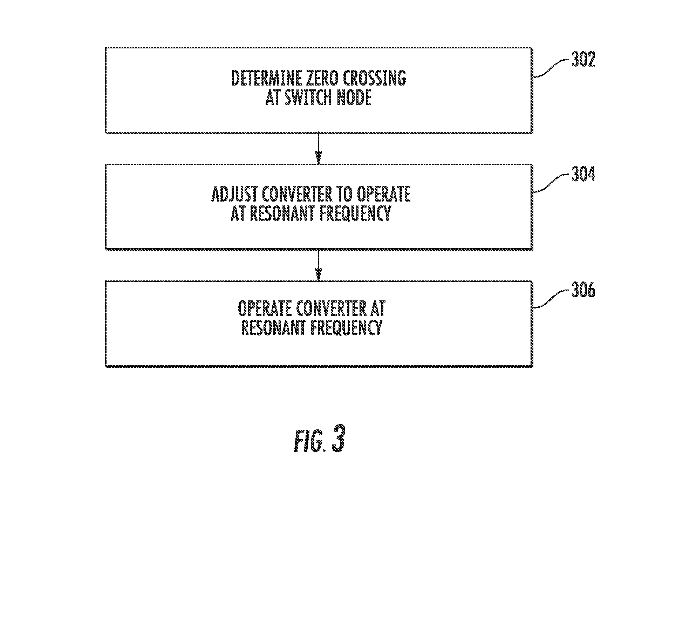

Referring now to Fig. 3, there is illustrated a flow diagram describing one method for using the half bridge driver 112 to control the switching frequency of the ZVS converter. Initially, the inductor zero current crossings are determined at the switching node at step 302 the zero voltage switching is determined by monitoring the voltage across the transistors 114 and 116 and then adjust the switching frequency to be synchronized to that zero voltage transition at node 118 at step 302 by monitoring the voltage across the drain to source of the MOSFET switch 116. Responsive to the zero current crossings, the switching frequency of the converter is adjusted to enable the switching frequency of the transistors 114 and 116 to be substantially equivalent to the resonant frequency at step 304. The switching transistors 114 and 116 of the ZVS converter are then operated at step 306 at the established resonant frequency.

The proposed control technique solves the problems described with respect to Figs. 2a and 2b by always switching the switching transistors 114 and 116 at the resonant frequency. The purpose of the control method is to provide the ability to operate at the resonant frequency, which is a more efficient operating frequency. It also provides the ability to design for a high frequency transformer but still enables the MOSFET switching transistors to operate at a lower average frequency. In isolated topologies, this enables the transformer 132 to be smaller. The circuit will also be able to run at a higher frequency without the losses associated with high frequency switching.

In one example, assuming that the switching frequency is 2 MHz and the resonant frequency is 2 MHz, if transistor 114 is on for 250 nanoseconds (50% duty cycle), the resonant tank consisting of the capacitor 122 and inductor 126 will resonate at 2 MHz. Thus, if transistor 116 is turned on from N x 250 nanoseconds where N is an integer equal to 1, 3, 5, ... , etc., the resonant tank energy will be transferred to the output node 150 and begin to decay. Assuming that N = 3, the switch 114 is turned on and the effective switching frequency of the MOSFET is only 1 MHz while the primary transformer will be seeing a two MHz sinusoidal wave. Thus, the magnetics could be designed for a high frequency system while the switching losses are based on a low frequency system. While the above description has been made with respect to the number of zero crossings of the current through the switching node 118, the switching frequency for controlling the operation of the switching transistors 114 and 116 may also be programmed by design based upon the values of the capacitor 122 and the inductor 126 within the resonant tank 120.

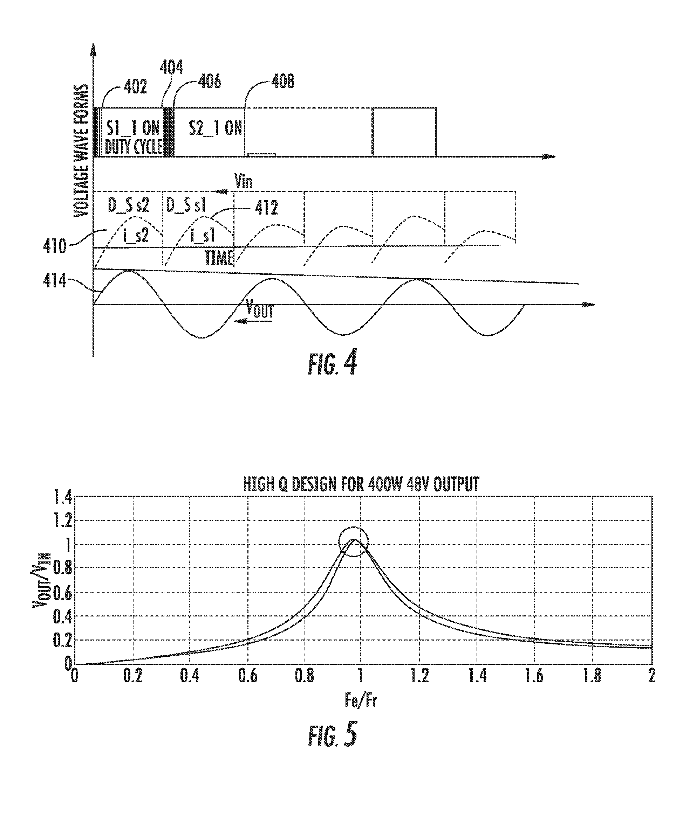

Fig. 4 illustrates a control method based upon a discreet on and off time of the upper and lower switching transistors. The upper switching transistor 114 is on from point 402 to 404 and the lower switching transistor 116 is on from point 406 to 408. The current through the upper switching transistor 114 is represented by line 410 while the current through switching transistor 116 is represented by line 412. This provides an output voltage as represented by line 414. Fig. 4 shows the gate signal of the upper and lower switching transistors 114 and 116. When the upper switch 114 is turned on for a 50% duty cycle (assuming that this is equal to 250 nanoseconds, the lower switching transistor 116 will be turned on an integral number multiple of that (250 nanoseconds x N). This guarantees that switching always occurs at zero voltage across the switches because the switching frequency is equal to the resonant frequency. Thus, in reality the effective switching frequency is lower than the resonant frequency.

Fig. 5 illustrates the quality factor

$$Q \ (\sqrt{Lr/Cr} / Rac \; ;$$

where Rac is the load reflected to the primary side of the transformer) of the resonant tank. The X axis is the normalized frequency and equals the switching/resonant frequency of the device. The Y axis comprises the gain. The normal way of control the output voltage of the resonant converter is by varying the ratio of the switching frequency to the resonant frequency. The proposed method uses a hysteretic or sliding mode around the ratio which equals one high Q point. The gain of the converter (Vout/Vin) is a function of the load, the quality factor and the ratio of the switching frequency to the resonant frequency. To keep the gain fixed, the only variable that is not fixed by the design is the switching frequency so the control is normally done by varying the switching frequency. The describe process keeps the ratio of Fs/Fr (switching frequency/ resonant frequency) equal to one, but the controller operates by skipping pulses so on average the effective switching frequency is variable. This is similar to skip mode in Dc-Dc converter where even though the switching frequency is fixed, by skipping pulses one can control the gain of the converter.

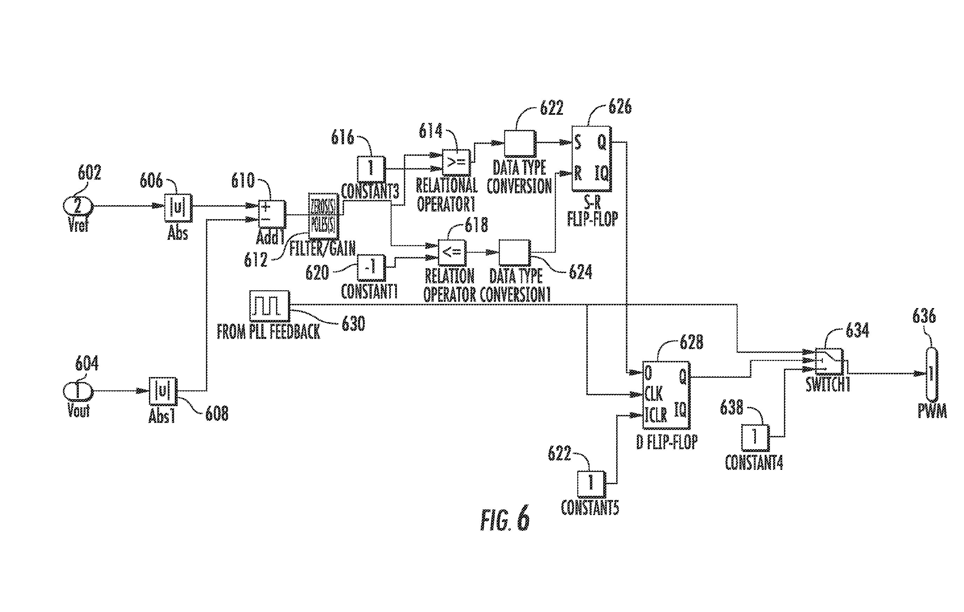

Referring now to Fig. 6, there is illustrated a circuit for controlling the PWM pulse to maintain a constant regulated output voltage. The PWM signal is generated by a zero voltage detect circuit in combination with the program clock from the PLL 630. A reference voltage $V_{REF}$ is applied at node 602. The output voltage is applied at node 604. The absolute value of the reference voltage $V_{REF}$ is taken at block 606. The absolute value of the output voltage $V_{OUT}$ is taken at block 608. The absolute value of the output voltage $V_{OUT}$ is subtracted from the absolute value of the reference voltage $V_{REF}$ at adder block 610. This value is applied to a filter gain block 612. The output of the filter gain block 612 is applied to a first relational operator 614 that determines whether the value from the filter gain block is greater than or equal to a constant value 616. The output of the filter gain block 612 is also applied to a relational operator 618 that determines whether the value from the filter gain block 612 is less than or equal to a constant value 620. The output of relational operator 614 goes to a data conversion block 622 that converts the output to CMOS or TTL data depending on the digital circuit used. The output of the relational operator 618 is applied to data conversion block 624 which converts the output into CMOS or TTL data depending on the digital circuit used. The output of data conversion block 622 is applied to the S input of SR flip-flop 626 and the output of data conversion block 624 is applied to the R input of SR flip-flop 626.

The Q output of the SR flip-flop 626 is applied to the D input of a D flip-flop 628. The clock input of the D flip-flop 628 is connected to receive a clock signal from PLL feedback 630. The CLR input of the D flip-flop is connected to a constant value 632. The D flip-flop 628 output is one when the output of 626 is one and zero when it is zero, so its main function is to synch the transition to the clock signal. The output of the D flip-flop 628 is applied to a switch 634 which provides the PWM signal at node 636. The switch 634 is controlled by the output of the D flip-flop 628, if it is High the output is the clock signal if it is low it is the constant 638.

It will be appreciated by those skilled in the art having the benefit of this disclosure that this control mode for ZVS converter at resonant operating frequencies provides a more efficiently operating ZVS converter. It should be understood that the drawings and detailed description herein are to be regarded in an illustrative rather than a restrictive manner, and are not intended to be limiting to the particular forms and examples disclosed. On the contrary, included are any further modifications, changes, rearrangements, substitutions, alternatives, design choices, and embodiments apparent to those of ordinary skill in the art, without departing from the spirit and scope hereof, as defined by the following claims. Thus, it is intended that the following claims be interpreted to embrace all such further modifications, changes, rearrangements, substitutions, alternatives, design choices, and embodiments.

**Claims**

1. A zero volt switching voltage converter, comprising:

   a switching network including a plurality of switches for generating a control current responsive to an input voltage source and switching control signals;

circuitry for generating a regulated output voltage responsive to the control current; and

control circuitry for generating the switching control signals, wherein the switching control signals operate the plurality of switches at a resonant frequency of the zero volt switching voltage converter.

2. The zero volt switching voltage converter of Claim 1, wherein the control circuitry generates the switching control signals responsive to zero voltage crossings across at least one of the plurality of switches.

3. The zero volt switching voltage converter of Claim 1, wherein the circuitry for generating further comprises:

a transformer having a primary side and a secondary side;

a resonant tank for generating a voltage across the primary side of the transformer responsive to the control current;

a rectifier connected to the secondary side of the transformer for rectifying a secondary side voltage from the transformer; and

a low-pass filter for filtering the rectified voltage from the rectifier and providing the regulated output voltage.

4. The zero volt switching voltage converter of Claim 3, wherein the resonant tank further comprises:

a capacitor connected to a switching node of the switching network;

a first inductor connected in series with the capacitor;

a second inductor connected in series with the first inductor and in parallel with the primary side of the transformer; and

wherein a value of the resonant frequency provided by the control circuitry may be programmed using values of the capacitor and the first inductor.

5. A zero volt switching voltage converter, comprising:

a switching network including a plurality of switches for generating a control current responsive to an input voltage source and switching control signals;

circuitry for generating a regulated output voltage responsive to the control current, wherein the circuitry for generating further comprises:

a transformer having a primary side and a secondary side;

a resonant tank for generating a voltage across the primary side of the transformer responsive to the control current;

a rectifier connected to the secondary side of the transformer for rectifying a secondary side voltage from the transformer;

a low-pass filter for filtering the rectified voltage from the rectifier and providing the regulated output voltage; and

control circuitry for generating the switching control signals, wherein the switching control signals operate the plurality of switches at a resonant frequency of the zero volt switching voltage converter.

6. The zero volt switching voltage converter of Claim 5, wherein the control circuitry generates the switching control signals responsive to zero current crossing of the control current.

7. The zero volt switching voltage converter of Claim 5, wherein the resonant tank further comprises:

a capacitor connected to a switching node of the switching network;

a first inductor connected in series with the capacitor;

a second inductor connected in series with the first inductor and in parallel with the primary side of the transformer; and

wherein a value of the resonant frequency provided by the control circuitry may be programmed using values of the capacitor and the first inductor.

8. A method for regulating voltage using a zero volt switching voltage converter, comprising the steps of:

generating a switching control signals, wherein the switching control signals operate a plurality of switches at a resonant frequency of the zero volt switching voltage converter;

generating a control current responsive to an input voltage source and the switching control signals; and

generating a regulated output voltage responsive to the control current.

9. The method of Claim 8, wherein the step of generating the switching control signals further comprises the step of generating the switching control signals responsive to zero voltage across at least one of the plurality of switches.

10. The method of Claim 8 wherein the step of generating the regulated output voltage further comprises the steps of.

generating a primary voltage across a primary side of a transformer; inductively coupling the primary voltage to a secondary side of the transformer as a secondary voltage;
rectifying the secondary voltage from the transformer;
filtering the rectified voltage; and
providing the regulated output voltage.

11. The method of Claim 8 further including the step of programming the resonant frequency using capacitive and inductive values within a resonant tank that generates the primary voltage.

FIG. 7

FIG. 2A

FIG. 2B

```
┌─────────────────────────────────────────────┐
│          DETERMINE ZERO CROSSING            │───302
│             AT SWITCH NODE                  │
└─────────────────────────────────────────────┘
                      │
                      ▼
┌─────────────────────────────────────────────┐
│        ADJUST CONVERTER TO OPERATE          │───304
│           AT RESONANT FREQUENCY             │
└─────────────────────────────────────────────┘
                      │
                      ▼
┌─────────────────────────────────────────────┐
│            OPERATE CONVERTER AT             │───306
│            RESONANT FREQUENCY               │
└─────────────────────────────────────────────┘
```

*FIG. 3*

FIG. 4

HIGH Q DESIGN FOR 400W 48V OUTPUT

FIG. 5

FIG. 6

**REFERENCES CITED IN THE DESCRIPTION**

**Patent documents cited in the description**

- US 61176978 A